# EUROPEAN PATENT APPLICATION

(11) **EP 4 349 781 A1**
(43) Date of publication of application: **10.04.2024**
(21) Application number: 22886770.1
(22) Date of filing: 17.10.2022
(51) Int. Cl.: C01D 15/02, B01J 45/00, C02F 1/42, C22B 26/12, H01M 4/525

(54) **METHOD FOR PRODUCING LITHIUM-CONTAINING SOLUTION AND METHOD FOR PRODUCING LITHIUM HYDROXIDE**

(30) Priority: 28.10.2021 JP 2021176695
(71) Applicant: SUMITOMO METAL MINING CO., LTD., Tokyo 105-8716 (JP)
(72) Inventor: TAKANO, Masatoshi, Niihama-shi, Ehime 792-0002 (JP); ASANO, Satoshi, Niihama-shi, Ehime 792-0002 (JP); HEGURI, Shin-ichi, Niihama-shi, Ehime 792-0002 (JP); SENBA, Yusuke, Niihama-shi, Ehime 792-0002 (JP)
(74) Representative: Jones, Nicholas Andrew
(86) International application number: PCT/JP2022/038609
(87) International publication number: WO 2023/074442

(57) **Abstract**

Provided is a method for producing a lithium containing solution and a method for producing lithium hydroxide allowing increasing a purity of a finally obtained lithium compound. A method for producing a lithium containing solution includes an ion-exchange step of obtaining a lithium containing solution in which a predetermined metallic element is reduced compared with an untreated lithium containing solution by using an ion-exchange resin. In the ion-exchange step, the predetermined metallic element is removed by passing the untreated lithium containing solution through a column containing the ion-exchange resin. A portion of the untreated lithium containing solution passing through the column that is a preliminarily determined amount after starting the liquid passing into the column is to be excluded from the lithium containing solution. Accordingly, a metallic element to be removed contained in the passing solution at an early stage is removable while reducing a disposal amount of the untreated lithium containing solution, and a content of the metal to be removed in the lithium containing solution is allowed to be reduced.

## Description

### TECHNICAL FIELD

The present invention relates to a method for producing a lithium containing solution and a method for producing lithium hydroxide. More specifically, the present invention relates to a method for producing a lithium containing solution and a method for producing lithium hydroxide allowing increasing a purity of a finally obtained lithium compound.

### BACKGROUND ART

Recently, as a positive electrode material for an on-vehicle battery, demand for a nickel-based positive electrode material, that is, NCA is expanding. Then, when the nickel-based positive electrode material is used for the on-vehicle battery, it is economically preferred that lithium as a constituent element of the nickel-based positive electrode material is supplied as lithium hydroxide. Patent Document 1 discloses a method for producing lithium hydroxide that allows obtaining a lithium hydroxide containing solution in which lithium hydroxide is dissolved from a predetermined lithium containing solution obtained from a salt lake brine or the like. With this method, high-purity lithium hydroxide can be obtained at low cost.
Patent Document 1: Japanese Unexamined Patent Application Publication No. 2020-193130

### DISCLOSURE OF THE INVENTION

### PROBLEMS TO BE SOLVED BY THE INVENTION

In Patent Document 1, an impurity removal step is provided before a conversion step, and metal ions are partially removed from a second lithium containing solution in the impurity removal step, thereby increasing the purity of lithium hydroxide as a final product. Patent Document 1 discloses, for example, a case where the impurity removal step includes a neutralization step and an ion-exchange step, and a case where the impurity removal step includes an oxidation step, the neutralization step, and the ion-exchange step.

However, for the positive electrode material for the on-vehicle battery, the purity of lithium hydroxide is desired to be further increased in some cases. In this case, for the lithium hydroxide produced by the producing method of Patent Document 1, there is a problem that the purity of finally obtained lithium hydroxide cannot be increased to a preliminarily determined purity due to remaining of a part of the metal ions.

In consideration of the above-described circumstances, it is an object of the present invention to provide a method for producing a lithium containing solution and a method for producing lithium hydroxide allowing increasing a purity of a finally obtained lithium compound.

### SOLUTIONS TO THE PROBLEMS

A method for producing a lithium containing solution according to a first invention includes an ion-exchange step of obtaining a lithium containing solution in which a preliminarily determined metallic element is reduced compared with an untreated lithium containing solution by bringing an ion-exchange resin into contact with the untreated lithium containing solution. In the ion-exchange step, the preliminarily determined metallic element is removed by passing the untreated lithium containing solution through a column containing the ion-exchange resin. A portion of the untreated lithium containing solution passing through the column that is a preliminarily determined amount after starting the liquid passing into the column, is to be excluded from the lithium containing solution.

In a method for producing a lithium containing solution according to a second invention, which is in the first invention, the ion-exchange resin is an iminodiacetic acid type chelating resin, and the iminodiacetic acid type chelating resin has a functional group of a sodium form.

In a method for producing a lithium containing solution according to a third invention, which is in the first invention or the second invention, the preliminarily determined amount is smaller than 4 in terms of BV

In a method for producing a lithium containing solution according to a fourth invention, which is in any one of the first invention to the third invention, the untreated lithium containing solution has a pH of 7 or more and 11 or less.

A method for producing lithium hydroxide according to a fifth invention is a method for producing lithium hydroxide in which lithium hydroxide is produced using the lithium containing solution produced by the method for producing a lithium containing solution according to any one of the first invention to the fourth invention. The method for producing lithium hydroxide includes: a crystallization step of obtaining solid lithium hydroxide from a lithium hydroxide containing solution; and a washing step of washing the solid lithium hydroxide with a washing liquid. The washing liquid is a lithium hydroxide containing solution having a preliminarily determined concentration equal to or more than a solubility thereof.

In a method for producing lithium hydroxide according to a sixth invention, which is in the fifth invention, the washing liquid is a saturated lithium hydroxide solution.

### EFFECTS OF THE INVENTION

According to the first invention, since the untreated lithium containing solution passing through the column that is the preliminarily determined amount after starting the liquid passing through the column in the ion-exchange step is to be excluded from the lithium containing solution, a metallic element to be removed contained in the passing solution at an early stage can be removed while reducing a disposal amount of the untreated lithium containing solution, and a content of the metal to be removed in the lithium containing solution can be reduced.

According to the second invention, since the ion-exchange resin is an iminodiacetic acid type chelating resin, and the iminodiacetic acid type chelating resin has a functional group of a sodium form, a property of the solution in the ion-exchange step is stabilized, and certainty of the removal of the metallic element to be removed is improved.

According to the third invention, since the preliminarily determined amount of the passing solution at the early stage is smaller than 4 in terms of BV, the disposal amount of the lithium containing solution can be more reduced, and a rate of obtaining a high-purity lithium containing solution can be increased.

According to the fourth invention, since the untreated lithium containing solution has a pH of 7 or more and 11 or less, the removal of calcium among the metallic elements to be removed can be performed with more certainty.

According to the fifth invention, since the lithium hydroxide containing solution having the predetermined concentration equal to or more than the solubility is used in the washing step after the crystallization step, the obtained crystal can be suppressed to be dissolved again, and the crystal of lithium hydroxide can be obtained without waste.

According to the sixth invention, since the washing liquid is a saturated lithium hydroxide solution, the crystallized crystal is avoided from being dissolved again, and the crystal of lithium hydroxide can be obtained without any waste.

### BRIEF DESCRIPTION OF THE DRAWINGS

Fig. 1 is a flowchart of a method for producing a lithium hydroxide containing solution including a method for producing a lithium containing solution according to one embodiment of the present invention.
Fig. 2 is a flowchart of a method for producing lithium hydroxide according to one embodiment of the present invention.
Fig. 3 is a graph illustrating a relation between BV and Li and Na concentrations in a solution in an ion-exchange step.

### DESCRIPTION OF PREFERRED EMBODIMENTS

Next, embodiments of the present invention will be described based on the drawings. However, the embodiments described below are examples of a method for producing a lithium containing solution or a method for producing lithium hydroxide for embodying a technical idea of the present invention, and the present invention does not limit the method for producing a lithium containing solution and the method for producing lithium hydroxide to the following.

The method for producing a lithium containing solution according to the present invention includes an ion-exchange step of obtaining a lithium containing solution in which a preliminarily determined metallic element is reduced compared with an untreated lithium containing solution by bringing an ion-exchange resin into contact with the untreated lithium containing solution. In the ion-exchange step, the preliminarily determined metallic element is removed by passing the untreated lithium containing solution through a column containing the ion-exchange resin. Then, a portion of the untreated lithium containing solution passing through the column that is a preliminarily determined amount after starting the liquid passing into the column is to be excluded from the lithium containing solution.

Since the untreated lithium containing solution passing through the column that is the preliminarily determined amount after starting the liquid passing into the column in the ion-exchange step is to be excluded from the lithium containing solution, a metallic element to be removed contained in the passing solution at an early stage can be removed while reducing a disposal amount of the untreated lithium containing solution, and a content of the metal to be removed in the lithium containing solution can be reduced.

In the method for producing a lithium containing solution, the ion-exchange resin is preferably an iminodiacetic acid type chelating resin, and the iminodiacetic acid type chelating resin preferably has a functional group of a sodium form. Accordingly, a property of the solution in the ion-exchange step is stabilized, and certainty of the removal of the metallic element to be removed is improved.

The preliminarily determined amount is preferably 4 or less in terms of BV Accordingly, the disposal amount of the lithium containing solution can be more reduced, and a rate of obtaining a high-purity lithium containing solution can be increased.

The untreated lithium containing solution preferably has a pH of 7 or more and 11 or less. The removal of calcium among the metallic elements to be removed can be performed with more certainty.

The method for producing lithium hydroxide according to the present invention is preferably a method for producing lithium hydroxide in which lithium hydroxide is produced using the lithium containing solution produced by the method for producing a lithium containing solution according to any one in the above description. The method for producing lithium hydroxide preferably includes a crystallization step of obtaining solid lithium hydroxide from a lithium hydroxide containing solution and a washing step of washing the solid lithium hydroxide with a washing liquid. The washing liquid is preferably a lithium hydroxide containing solution having a preliminarily determined concentration equal to or more than the solubility. Accordingly, the obtained crystal can be suppressed to be dissolved again, and the crystal of lithium hydroxide can be obtained without waste.

The washing liquid is preferably a saturated lithium hydroxide solution. Accordingly, the crystallized crystal is avoided from being dissolved again, and the crystal of lithium hydroxide can be obtained without any waste.

### (Method for Producing Lithium Hydroxide Containing Solution Including One Embodiment of Method for Producing Lithium Containing Solution)

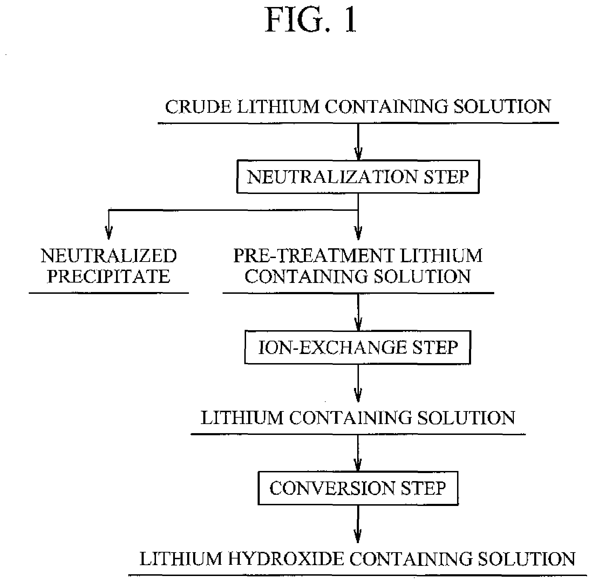

Fig. 1 is a flowchart of a method for producing a lithium hydroxide containing solution including a method for producing a lithium containing solution according to one embodiment of the present invention. While steps provided before and after the method for producing a lithium containing solution of the embodiment are not specifically limited, a high-purity lithium hydroxide containing solution can be obtained, for example, by providing the following steps before and after the method for producing a lithium containing solution of the embodiment.

### <Neutralization Step>

Fig. 1 is a flowchart of a method for producing a lithium hydroxide containing solution including a method for producing a lithium containing solution according to one embodiment of the present invention. The neutralization step illustrated in Fig. 1 is preferably provided in an upstream side of the method for producing a lithium containing solution according to the embodiment. The neutralization step is a step of obtaining an untreated lithium containing solution as a post-neutralization liquid by adding alkali to a crude lithium containing solution. By this step, for example, a neutralized precipitate containing impurities other than lithium chloride is obtained. Here, the crude lithium containing solution means a solution in which a lithium compound is contained when the liquid is crystallized. For example, a solution obtained by reacting lithium carbonate with hydrochloric acid, a solution obtained from a lithium containing ore by an extraction with hydrochloric acid, or a solution obtained from a brine by selectively adsorbing/separating lithium corresponds to the crude lithium containing solution. The crude lithium containing solution is preferably a solution obtained from a brine by selectively adsorbing/separating lithium.

In the neutralization step, metals other than lithium are removed by adding alkali. The ion-exchange resin is used for removing mainly divalent or more metal ions. However, when a significantly large amount of divalent or more metal ions are contained in a liquid before contacting the ion-exchange resin, the ion-exchange resin needs to be frequently changed. However, since the ion-exchange resin is expensive, the cost for producing lithium hydroxide increases, or a load of a work for changing the ion-exchange resin increases. A load of a work for regenerating the ion-exchange resin also increases. Therefore, in the neutralization step, alkali is added to remove a part of metals other than lithium. As the metals other than lithium, divalent magnesium, manganese, and the like are included. Specifically, in the neutralization step, for example, by adding sodium hydroxide to a lithium chloride containing solution as the crude lithium containing solution, magnesium and manganese are precipitated as magnesium hydroxide and manganese hydroxide, and the precipitates are recovered, thereby removing the metals other than lithium. While alkalinity is enough to precipitate to remove magnesium and the like, when an excessively high pH increases the neutralizer cost, and it is not preferable. Therefore, the pH of the post-neutralization liquid after the neutralization step is preferably 8.5 or more and 12 or less.

While the neutralization step has been described as a step included in the method for producing a lithium hydroxide containing solution, the untreated lithium containing solution in the method for producing a lithium containing solution of the present invention does not necessarily need to be the untreated lithium containing solution obtained through the neutralization step. An untreated lithium containing solution obtained by including a step other than the neutralization step is also usable without a problem.

### <Ion-Exchange Step>

The method for producing a lithium containing solution according to one embodiment of the present invention includes an ion-exchange step. Fig. 1 illustrates an example of positioning the ion-exchange step in the method for producing a lithium hydroxide containing solution. The ion-exchange step is a step of obtaining a lithium containing solution by bringing the untreated lithium containing solution into contact with the ion-exchange resin. In the ion-exchange step, all or a part of calcium, aluminum, manganese, and magnesium as the preliminarily determined metallic elements is removed. Compared with the untreated lithium containing solution, a part of or all of these metallic elements contained in the lithium containing solution is reduced.

Here, the "untreated lithium containing solution" is used as a word that means a solution until the ion-exchange step ends. That is, the "untreated lithium containing solution" includes both of a solution at a stage before being brought into contact with the ion-exchange resin and a solution at a stage of being in contact with the ion-exchange resin.

The ion-exchange resin is a kind of synthetic resins, and has a structure ionized as an ion-exchange group in a part of its molecular structure. In the ion-exchange step, an ion-exchange resin that can remove the divalent or more metal ions, that is, an iminodiacetic acid type chelating resin or an iminodiacetate type chelating resin is preferred. For the pH of the post-neutralization liquid in the ion-exchange step, the preferred value is decided depending on the ion-exchange resin. However, it is preferred to directly perform the ion-exchange step on the untreated lithium containing solution obtained by the neutralization step.

Furthermore, in the iminodiacetic acid type chelating resin and the iminodiacetate type chelating resin, the functional group is preferably a sodium form.

Since the ion-exchange resin is the iminodiacetic acid type chelating resin, and the iminodiacetic acid type chelating resin has the functional group of sodium form, the property of the solution in the ion-exchange step is stabilized, and certainty of the removal of the metallic element to be removed is improved.

In this embodiment, the method for bringing the ion-exchange resin into contact with the untreated lithium containing solution is a method using a column. The untreated lithium containing solution passing through the column preferably has a liquid passing rate of 1 or more and 7 or less in terms of SV SV is the abbreviation of Space Velocity, and indicates the liquid passing quantity (unit is BV described below) per unit time (one hour). When the liquid passing rate is less than 1 in terms of SV, the efficiency of producing lithium hydroxide decreases. The liquid passing rate greater than 7 in terms of SV causes the liquid flow to be excessively fast, thus failing to capture the metals in some cases. This liquid passing rate allows the removal of magnesium and calcium, which are divalent metals, with more certainty.

The post-neutralization liquid passing through the column preferably has a liquid passing quantity of 10 or more and 35 or less in terms of BV BV is the abbreviation of Bed Volume, and is a unit indicating how many times of a volume of the ion-exchange resin in the column. When the liquid passing quantity is less than 10 in terms of BV, the efficiency of producing lithium hydroxide decreases. The liquid passing quantity greater than 35 in terms ofBV causes a breakthrough exceeding a metal capture capacity of the ion-exchange resin, thus failing to capture the metals in some cases. This liquid passing quantity can further ensure the removal of the magnesium and the calcium.

The ion-exchange resin used in the ion-exchange step can be regenerated. By immersing the used ion-exchange resin in a liquid in which a hydrogen concentration of acid is 0.3 mol/L or more and 2.0 mol/L or less, the captured metals are eluted.

In the ion-exchange step of this embodiment, a portion of the untreated lithium containing solution passing through the column that is the preliminarily determined amount after starting the liquid passing through the column is extracted from the untreated lithium containing solution, and the extracted untreated lithium containing solution is to be excluded from the lithium containing solution obtained after the ion-exchange step.

For example, when the iminodiacetic acid type chelating resin having the functional group of the sodium form is used as the ion-exchange resin, there is a problem that sodium is mixed in the untreated lithium containing solution at an early stage of starting the ion-exchange step, and the sodium remains in the lithium containing solution obtained after the ion-exchange step. The metal other than lithium remaining in the lithium containing solution is an impurity in the final lithium compound, and for example, when the lithium compound is used as a positive electrode material of a secondary battery, a failure such as shortening a product lifetime of the secondary battery occurs. Therefore, to remove the impurities mixed at the early stage of the ion-exchange step, the untreated lithium containing solution passing through the column that is the preliminarily determined amount after starting the liquid passing into the column is extracted, and the extracted untreated lithium containing solution is to be excluded from the lithium containing solution obtained after the ion-exchange step. For example, when the untreated lithium containing solution is repeatedly passed through the column, the untreated lithium containing solution at the early stage is extracted, and the remaining untreated lithium containing solution is repeatedly passed through the column.

Since the untreated lithium containing solution passing through the column that is the preliminarily determined amount after starting the liquid passing into the column in the ion-exchange step is to be excluded from the lithium containing solution obtained after the ion-exchange step, the metallic element to be removed contained in the passing solution at the early stage can be removed while reducing a disposal amount of the untreated lithium containing solution, and the content of the metal to be removed in the lithium containing solution can be reduced.

While the untreated lithium containing solution passing through the column that is the preliminarily determined amount after starting the liquid passing into the column is extracted in this embodiment, the preliminarily determined amount of the extraction is preferably smaller than 4 in terms of BV Accordingly, the disposal amount of the lithium containing solution can be reduced, and the rate of obtaining the high-purity lithium containing solution can be increased.

In this embodiment, the pH of the untreated lithium containing solution is preferably 7 or more and 11 or less. Among the ion-exchange resins, the chelating resin has a pH dependence in which an adsorption efficiency increases as the pH increases. Therefore, the pH smaller than 7 does not allow the adsorption removal of calcium. The pH greater than 11 increases an adsorption amount of coadsorbed Li. That is, the loss of Li increases. Further, a usage of the neutralizer, such as NaOH increases, thus increasing the cost. Since the untreated lithium containing solution has the pH of 7 or more and 11 or less, the removal of calcium among the metallic elements to be removed can be performed with more certainty.

### <Conversion Step>

As illustrated in Fig. 1, in the lithium containing solution obtained by the method for producing a lithium containing solution according to the embodiment, for example, in the conversion step, a lithium compound such as lithium chloride contained in the lithium containing solution is converted into lithium hydroxide to obtain a lithium hydroxide containing solution in which lithium hydroxide is dissolved. In the following description, assume that the lithium compound contained in the lithium containing solution is lithium chloride.

When the lithium compound in the lithium containing solution is lithium chloride, lithium chloride is dissolved in the lithium containing solution. In this step, for example, an electrodialysis using a bipolar membrane is performed to convert these liquids into the lithium hydroxide containing solution containing lithium hydroxide and hydrochloric acid. That is, by performing the electrodialysis, lithium chloride in the lithium containing solution is decomposed, lithium ions of lithium chloride pass through a cation membrane and bind to hydroxide ions to become lithium hydroxide, and for example, chloride ions pass through an anion membrane to become hydrochloric acid. The recovered hydrochloric acid can be recycled to the elution step. Accordingly, the usage of hydrochloric acid can be reduced.

Note that, for example, an electrodialysis using an ion-exchange membrane corresponds to the conversion step in addition to the electrodialysis using the bipolar membrane. When a cation-exchange membrane is used as the ion-exchange membrane, lithium hydroxide is generated in a cathode chamber.

### (Method for Producing Lithium Hydroxide According to One Embodiment of Present Invention)

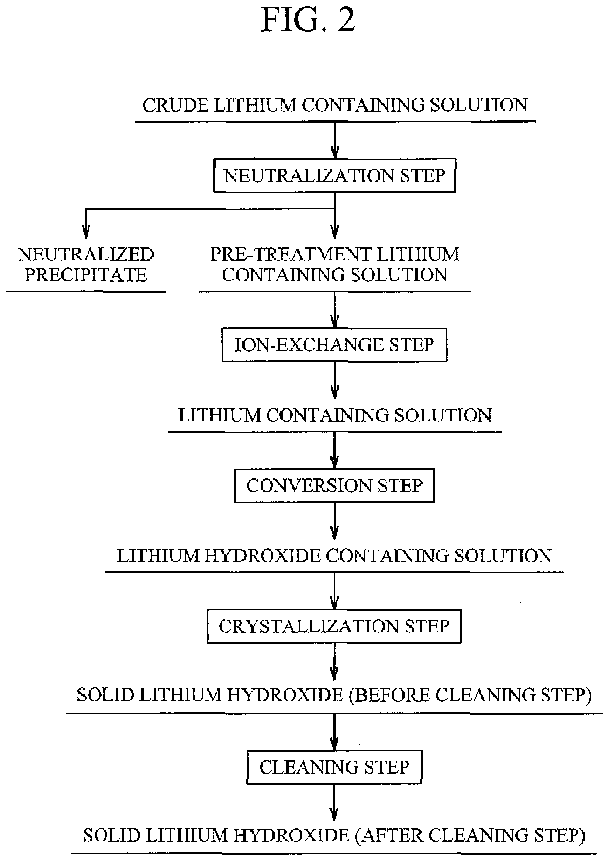

Fig. 2 is a flowchart of a method for producing lithium hydroxide according to one embodiment of the present invention. As illustrated in Fig. 2, the method for producing lithium hydroxide described below has a configuration in which a crystallization step and a washing step are added to the lithium hydroxide containing solution produced by the method for producing a lithium hydroxide containing solution illustrated in Fig. 1. Since the steps for obtaining the lithium hydroxide containing solution are the same as those in the producing method illustrated in Fig. 1, the explanations are omitted.

### <Crystallization Step>

In the crystallization step, by solidifying the lithium hydroxide dissolved in the lithium hydroxide containing solution, a solid lithium hydroxide is obtained. A crystallization mother liquor is obtained together with the solid lithium hydroxide. In the conversion step, lithium becomes a lithium hydroxide, and at the same time, the alkali metals, such as sodium and potassium, become hydroxides. Accordingly, they are also contained in the lithium hydroxide containing solution obtained in the conversion step. Furthermore, when the lithium compound contained in the lithium containing solution is lithium chloride, chlorine ions as anions also pass through the membrane to be contained in the lithium hydroxide containing solution. In the crystallization step, the difference in solubility between the hydroxides is used to solidify the lithium hydroxide and separate contained impurities.

In the crystallization step, the lithium hydroxide containing solution is heated to be concentrated. In this respect, the concentration of metal ions contained in the solution increases, and lithium hydroxide having a relatively low solubility is deposited and solidified at first. The deposited lithium hydroxide is recovered as the solid lithium hydroxide. In this respect, sodium hydroxide or potassium hydroxide having relatively high solubility is not deposited and remains in the solution. Therefore, the purity of the recovered lithium hydroxide increases.

For example, at 60°C, the solubility of lithium hydroxide is 13.2 g/100 g-water, and it is seen that the solubility of lithium hydroxide is significantly low compared with 174 g/100 g-water of sodium hydroxide and 154 g/100 g-water of potassium hydroxide. Since the chlorine ion is 2 g/L also during the operation of heating to concentrate, the chlorine ion is not deposited as chloride of the alkali metal in the lithium hydroxide.

The crystallization step can be industrially performed with a continuous crystallization using a crystallization can. It can be performed also with a batch crystallization. The crystallization mother liquor generated in the crystallization step is a concentrated alkaline aqueous solution. Since the crystallization mother liquor contains lithium hydroxide by an amount of the solubility, repeating the step before the neutralization step increases a lithium recovery rate. In addition, the neutralizer cost decreases.

### <Washing Step>

In the recovery of the solid lithium hydroxide obtained in the crystallization step, the crystallization mother liquor is attached to the solid lithium hydroxide in some cases. As illustrated in Fig. 2, in this embodiment, the solid lithium hydroxide (before washing step) obtained by the crystallization step is washed with a washing liquid, and the crystallization mother liquor attached to the solid lithium hydroxide (before washing step) is washed away, thereby obtaining a solid lithium hydroxide (after washing step).

In this embodiment, the washing liquid used in the washing step is a lithium hydroxide containing solution having a preliminarily determined concentration equal to or more than a solubility thereof. For example, since the solubility of lithium hydroxide at 0°C is 12 g/100 g-water, the lithium hydroxide containing solution having the solubility of 10 g/100 g-water lower than it is preferred. Furthermore, the washing liquid is preferably a saturated lithium hydroxide solution.

By using the lithium hydroxide containing solution having the predetermined concentration equal to or more than the solubility in the washing step after the crystallization step, the obtained crystal can be suppressed to be dissolved again, and the crystal of lithium hydroxide can be obtained without waste.

Since the washing liquid is the saturated lithium hydroxide solution, the crystallized crystal is avoided from being dissolved again, and the crystal of lithium hydroxide can be obtained without any waste.

### (Others)

While the method for producing lithium hydroxide according to the present invention has been described so as to use the lithium hydroxide containing solution obtained by the method for producing a lithium hydroxide containing solution illustrated in Fig. 1, the present invention is not especially limited to this. The method for producing lithium hydroxide according to the present invention is applicable insofar as the solution contains lithium hydroxide.

### [Examples]

While the following describes specific examples of the method for producing a lithium containing solution according to the present invention, the present invention is not limited to these examples.

### (Example 1)

### <Preceding Stage of Ion-Exchange Step>

As the untreated lithium containing solution, a lithium chloride containing solution having a composition illustrated in Table 1 was prepared through the neutralization step and the like.

**[Table 1]**

| Contained Metals | | Ca | K | Li | Mg | Mn | Na |
|---|---|---|---|---|---|---|---|
| Concentration | g/L | 0.017 | 0.025 | 21.000 | <0.001 | <0.001 | 0.039 |

### <Ion-Exchange Step>

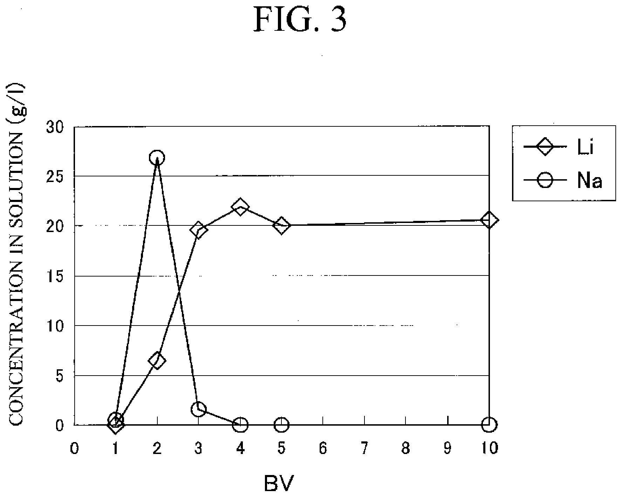

The column containing the ion-exchange resin was prepared. As the ion-exchange resin, an ion-exchange resin of iminodiacetic acid type having a functional group of a sodium form (Amberlite IRC743) was used. The untreated lithium containing solution having the adjusted pH of 8.2 was passed through this column with 5 in terms of SV (Space Velocity) by 30 in terms of BV (Bed Volume). In this respect, the untreated lithium containing solution was partially extracted per 1 in terms of BV, and the concentrations in the solution of lithium and sodium per 1 in terms of BV were measured. Fig. 3 illustrates the measurement result. Table 2 illustrates the composition of the whole lithium containing solution from 4 to 30 in terms of BV recovered after extracting the untreated lithium containing solution by 3 in terms of BV after starting the liquid passing.

**[Table 2]**

| Contained Metals | | Ca | K | Li | Mg | Mn | Na |
|---|---|---|---|---|---|---|---|
| Concentration | g/L | <0.00005 | 0.025 | 21.000 | <0.00005 | <0.001 | 0.044 |

As illustrated in Fig. 3, it is seen that the sodium concentration in the solution becomes high between 1 and 3 in terms of BV It is estimated that this is because sodium of the functional group of the chelating resin is dissolved. Then, in this example, the untreated lithium containing solution to 3 in terms of BV was extracted, and the composition of the lithium containing solution from 4 to 30 in terms of BV was measured. It is seen that, by performing the ion-exchange step, the increase of the Na concentration was able to be suppressed while the concentration in the solution of Ca as a divalent metallic element was reduced. In Fig. 3, Li is low at 1 and 2 in terms of BV, and it can be estimated that this is because the liquid in voids of the column was extruded, or the chelating resin took in Li instead of Na.

### < Sub sequent Stage of Ion-Exchange Step>

The conversion step was performed using the lithium containing solution obtained by the ion-exchange step, and the lithium hydroxide containing solution containing a small amount of impurities was obtained.

### (Comparative Example 1)

The untreated lithium containing solution was passed through the column, and a lithium containing solution was obtained without especially extracting the untreated lithium containing solution. Other conditions were the same as those in Example 1. Table 3 indicates the result of the measurement of the metal concentration in the solution of the whole lithium containing solution of this case.

**[Table 3]**

| Contained Metals | | Ca | K | Li | Mg | Mn | Na |
|---|---|---|---|---|---|---|---|
| Concentration | g/L | <0.00005 | 0.025 | 21.000 | <0.00005 | <0.001 | 3.600 |

While it is the same as Example 1 that the Ca concentration in the solution is reduced by the ion-exchange step, it is seen that the Na concentration increased because the passing solution at the early stage was not removed.

## Claims

1. A method for producing a lithium containing solution, comprising
an ion-exchange step of obtaining a lithium containing solution in which a preliminarily determined metallic element is reduced compared with an untreated lithium containing solution by bringing an ion-exchange resin into contact with the untreated lithium containing solution, wherein
in the ion-exchange step, the preliminarily determined metallic element is removed by passing the untreated lithium containing solution through a column containing the ion-exchange resin, and
a portion of the untreated lithium containing solution passing through the column that is a preliminarily determined amount after starting the liquid passing into the column, is to be excluded from the lithium containing solution.

2. The method for producing a lithium containing solution according to claim 1, wherein
the ion-exchange resin is an iminodiacetic acid type chelating resin, and
the iminodiacetic acid type chelating resin has a functional group of a sodium form.

3. The method for producing a lithium containing solution according to claim 1 or 2, wherein
the preliminarily determined amount is smaller than 4 in terms of BV

4. The method for producing a lithium containing solution according to any one of claims 1 to 3, wherein
the untreated lithium containing solution has a pH of 7 or more and 11 or less.

5. A method for producing lithium hydroxide in which lithium hydroxide is produced using the lithium containing solution produced by the method for producing a lithium containing solution according to any one of claims 1 to 4, the method for producing lithium hydroxide comprising:
a crystallization step of obtaining solid lithium hydroxide from a lithium hydroxide containing solution; and
a washing step of washing the solid lithium hydroxide with a washing liquid, wherein
the washing liquid is a lithium hydroxide containing solution having a preliminarily determined concentration equal to or more than a solubility thereof.

6. The method for producing lithium hydroxide according to claim 5, wherein
the washing liquid is a saturated lithium hydroxide solution.
